(19) Europäisches Patentamt / European Patent Office / Office européen des brevets

(11) **EP 4 239 732 A2**

(12) **EUROPÄISCHE PATENTANMELDUNG**

(43) Veröffentlichungstag:
06.09.2023   Patentblatt 2023/36

(21) Anmeldenummer: 23188003.0

(22) Anmeldetag: 23.10.2017

(51) Internationale Patentklassifikation (IPC):
**H01M 4/90** (2006.01)

(52) Gemeinsame Patentklassifikation (CPC):
**B01J 23/42; B01J 35/0013; B01J 35/002; B01J 35/006; B01J 35/02; B01J 37/031; B01J 37/04; B01J 37/16; C25B 11/04; H01M 4/926;** Y02E 60/36; Y02E 60/50

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(62) Dokumentnummer(n) der früheren Anmeldung(en) nach Art. 76 EPÜ:
**17197763.0 / 3 473 337**

(71) Anmelder: **Heraeus Deutschland GmbH & Co. KG**
**63450 Hanau (DE)**

(72) Erfinder:
• **NESSELBERGER, Markus**
  **63450 Hanau (DE)**
• **HASCHÉ, Frédéric**
  **63450 Hanau (DE)**
• **SCHÖFFLER, Rianne**
  **63450 Hanau (DE)**
• **EWEINER, Florian**
  **63450 Hanau (DE)**
• **NEUSCHÜTZ, Mark**
  **63450 Hanau (DE)**

(74) Vertreter: **Maiwald GmbH**
**Elisenhof**
**Elisenstraße 3**
**80335 München (DE)**

Bemerkungen:
Diese Anmeldung ist am 27-07-2023 als Teilanmeldung zu der unter INID-Code 62 erwähnten Anmeldung eingereicht worden.

(54) **GETRÄGERTE PLATINPARTIKEL UND DEREN VERWENDUNG ALS KATALYSATOR IN BRENNSTOFF- ODER ELEKTROLYSEZELLEN**

(57)   Die vorliegende Erfindung betrifft eine Katalysatorzusammensetzung, umfassend
- ein Trägermaterial in Form von Kohlenstoffpartikeln,
- metallische Platinpartikel, die auf dem Trägermaterial vorliegen und eine Volumengewichtete Partikelgrößenverteilung, bestimmt über Röntgenkleinwinkelstreuung, mit einem $d_{10}$-Wert $\geq$ 2,0nm und $d_{90}$-Wert $\leq$ 7,0 nm aufweisen.

Figur 1

**Beschreibung**

Die vorliegende Erfindung betrifft geträgerte Platinpartikel und deren Verwendung als Katalysator in Brennstoff- oder Elektrolysezellen.

Es ist bekannt, dass Platin-Partikel, die auf einem Trägermaterial wie z.B. Kohlenstoff aufgebracht sind, als Katalysatoren für Brennstoffzellen (beispielsweise Protonenaustauschmembran(PEM)-Brennstoffzellen) oder Elektrolysezellen (beispielsweise für die Wasserelektrolyse) eingesetzt werden. Diese geträgerten Katalysatorzusammensetzungen enthalten als Komponenten das katalytisch aktive Material (Platinpartikel) und das üblicherweise ebenfalls in Form von Partikeln vorliegende Trägermaterial (z.B. Kohlenstoffpartikel). Die Reaktionen, die mit diesem Katalysatorsystem katalysiert werden, sind Oberflächenreaktionen. Daher ist die verfügbare Platin-Oberfläche von entscheidender Bedeutung und sollte so groß wie möglich sein (Maximierung der zugänglichen Platin-Oberfläche). Dies impliziert, die Platinpartikel möglichst klein zu machen, um ein möglichst großes Verhältnis von Oberfläche zu Volumen zu erzielen. Allerdings führt eine abnehmende Partikelgröße dieser Platinpartikel zu einer geringeren Stabilität in dem eingesetzten elektrochemischen Umfeld. Es ist daher nötig, einerseits die Platinpartikel so groß wie nötig zu gestalten, um eine ausreichende Stabilität zu erreichen, andererseits aber so klein wie möglich zu halten, um eine ausreichend hohe Masseaktivität (d.h. einen auf die Platinmasse normierten Strom bei gegebener Spannung) zu erzielen.

Um die elektrochemisch aktive Platinoberfläche (Summe der Oberfläche aller Platinpartikel, die elektrochemisch zugänglich ist) zu maximieren, ist es erforderlich, die Platinpartikel möglichst gleichförmig und mit hohem Dispersionsgrad auf dem Träger zu verteilen. Weiterhin sollten die Synthesebedingungen so gewählt sein, dass sich die Platinpartikel ganz überwiegend auf dem Träger bilden, während die Bildung ungeträgerter Platinpartikelagglomerate möglichst vermieden wird.

J.C. Meier et al., Beilstein J. Nanotechnol., 2014, 5, S. 44-67, beschreiben Katalysatorzusammensetzungen für Brennstoffzellen, die Kohlenstoff als Trägermaterial und Platinpartikel enthalten. Die Eigenschaften der Kohlenstoffgeträgerten Platinpartikel sind in Tabelle 1 zusammengefasst. Die Partikelgrößen der Platinpartikel wurden anhand von TEM-Aufnahmen bestimmt. Da mit dieser Methode nur eine sehr begrenzte Anzahl von Platinpartikeln berücksichtigt wird und beispielsweise in den Poren des Trägermaterials vorliegende Platinpartikel nicht verlässlich erfasst werden, erlaubt TEM keine verlässliche Bestimmung der Partikelgrößenverteilung der Platinpartikel. Gemäß Tabelle 1 der Publikation wurden bei einer über TEM ermittelten durchschnittlichen Größe der Platinpartikel von 3-4 nm in $HClO_4$ Masseaktivitäten von 0,32 A/mg Pt und 0,35 A/mg Pt bestimmt. Bei einer weiteren Reduzierung der durchschnittlichen Partikelgröße der Platinpartikel auf 1-2 nm konnten Masseaktivitäten von mehr als 0,40 A/mg Pt erzielt werden. Aufgrund der sehr geringen Partikelgröße nimmt jedoch die Stabilität der Platinpartikel deutlich ab.

Für die Herstellung von Kohlenstoff-geträgerten Platinpartikeln sind eine Reihe von Verfahren bekannt, siehe z.B. den Übersichtsartikel von K.B. Kokoh et al., Catalysts, 2015, 5, S. 310-348. Die Bildung von Platinpartikeln auf einem Kohlenstoffträger kann beispielsweise über die Mikroemulsionsmethode, die Polyol-Methode oder ein Verfahren, bei dem zunächst der Träger mit einer Platinverbindung imprägniert und diese Platinverbindung anschließend zu metallischem Platin reduziert wird, erfolgen.

Bei der Mikroemulsionsmethode kommen üblicherweise Tenside zum Einsatz, die auf der Oberfläche der sich bildenden Platinpartikel adsorbiert werden können und vor der Anwendung der geträgerten Platinpartikel als Katalysator entfernt werden müssen.

Bei der Polyol-Methode fungiert der mehrwertige Alkohol (z.B. Ethylenglykol) sowohl als Lösungsmittel wie auch als Reduktionsmittel. Bei der Oxidation des Polyols entstehen Verbindungen, die mit der Oberfläche der sich bildenden Platinpartikel wechselwirken und die Partikel daher stabilisieren. Vor der Anwendung der geträgerten Platinpartikel als Katalysator müssen diese adsorbierten Verbindungen durch eine geeignete Behandlung (z.B. thermische Behandlung oder Waschen mit einer Säure) entfernt werden.

Wie oben bereits erwähnt, ist auch bekannt, zunächst ein Kohlenstoff-basiertes Trägermaterial, das in einem wässrigen Medium dispergiert ist, mit einer als Precursor fungierenden Platinverbindung zu imprägnieren (Imprägnierschritt) und anschließend die die auf dem Trägermaterial vorliegende Platinverbindung zu metallischem Platin zu reduzieren (Reduktionsschritt).

Für den Reduktionsschritt kann das mit der Platinverbindung imprägnierte Trägermaterial aus dem wässrigen Medium entfernt und getrocknet werden, um anschließend bei höherer Temperatur mit einem reduzierenden Gas wie Wasserstoff behandelt zu werden. Dies kann jedoch zu einer Agglomeration benachbarter Platinpartikel und somit einer unerwünschten und auch schwer steuerbaren Erhöhung der Partikelgröße führen.

Alternativ kann die Reduktion der auf dem Trägermaterial vorliegenden Platinverbindung bereits in dem wässrigen Medium durchgeführt werden. Als Reduktionsmittel können beispielsweise $NaBH_4$, Ameisensäure, Wasserstoff ($H_2$), Natriumthiosulfat, Formaldehyd oder Hydrazin eingesetzt werden.

US 2006/0099483 A1 beschreibt ein Verfahren zur Herstellung eines Trägermaterials, auf dem Katalysatorpartikel aufgebracht werden können. In diesem Verfahren wird beispielsweise ein anorganisches Oxid wie $SiO_2$ mit einem Kohlenstoff-basierten Material (z.B. Ruß oder Aktivkohle) gemischt und einer Wärmebehandlung unterzogen. Auf dem dabei erhaltenen Trägermaterial können über ein Imprägnierverfahren mit anschließender Reduktion metallische Partikel aufgebracht werden. Über eine Behandlung mit einer Säure oder Base kann das anorganische Oxid des Trägermaterial teilweise wieder entfernt werden.

Eine Aufgabe der vorliegenden Erfindung ist die Herstellung von geträgerten (d.h. auf einem Trägermaterial vorliegenden) Platinpartikeln über ein Verfahren, das einfach und effizient durchgeführt werden kann und die Partikel möglichst gleichförmig und mit hohem Dispersionsgrad auf dem Träger verteilt, während die Bildung ungeträgerter, agglomerierter Platinpartikel möglichst vermieden wird. Eine weitere Aufgabe der vorliegenden Erfindung ist die Bereitstellung einer Katalysatorzusammensetzung auf Basis von geträgerten Platinpartikeln, die gute katalytische Eigenschaften, insbesondere eine hohe Masseaktivität, aufweist.

Gelöst wird die Erfindung durch ein Verfahren zur Herstellung einer Katalysatorzusammensetzung, wobei

(i) in einem wässrigen Medium ein Trägermaterial in Form von Kohlenstoffpartikeln mit einer Platinverbindung imprägniert wird,
(ii) das imprägnierte Trägermaterial in dem wässrigen Medium unter Rühren bei einem pH-Wert im Bereich von 3,5-6,0 und einer Rührer-Reynoldszahl von mindestens 50.000 mit einem Reduktionsmittel in Kontakt gebracht wird.

Im Rahmen der vorliegenden Erfindung wurde erkannt, dass ein hoher Dispersionsgrad von metallischen Platinpartikeln auf dem Trägermaterial bei gleichzeitig sehr geringem Anteil von nicht geträgerten Platinpartikeln realisiert werden kann, wenn für den Reduktionsschritt (ii) beide der oben genannten Bedingungen, also ein pH-Wert im Bereich von 3,5-6,0 und außerdem eine ausreichend hohe Rührer-Reynoldszahl von mindestens 50.000 (d.h. einer ausreichend turbulenten Durchmischung des wässrigen Mediums), eingehalten werden. Wenn einer dieser Verfahrensparameter nicht eingehalten wird, kann dies, wie die nachstehenden Beispiele zeigen, zu einer ungleichmäßigen Verteilung der metallischen Platinpartikel auf dem Trägermaterial und/oder der Bildung von ungeträgerten Platinpartikelagglomeraten führen.

Wie dem Fachmann bekannt ist, stellt die Reynoldszahl im Bereich der Rührtechnik (in diesem Zusammenhang auch als Rührer-Reynoldszahl bekannt) ein Maß dafür dar, wie intensiv ein flüssiges Medium gerührt wird. Für Werte der Rührer-Reynoldszahl von mehr als 10.000 gilt ein flüssiges Medium als turbulent durchmischt.

Im Rahmen der vorliegenden Erfindung muss diese Untergrenze für eine turbulente Durchmischung aber noch deutlich überschritten werden. In Kombination mit dem erfindungsgemäßen pH-Wert-Bereich führt dies zu einem sehr hohen Dispersionsgrad der geträgerten Partikel, während die Bildung ungeträgerter Platinpartikel sehr effektiv unterdrückt wird.

Geeignete Trägermaterialien in Form von Kohlenstoffpartikeln, die als Träger für Platinpartikel fungieren können, sind dem Fachmann allgemein bekannt.

Beispielhaft können Ruß (*"carbon black"*, z.B. Acetylen-Ruß (*"acetylene black"*), Channel-Ruß (*"channel black"*), Furnace-Ruß (*"furnace black"*), Flammruß (*"lamp black"*) oder Spaltruß (*"thermal black"*)), Aktivkohle (*"activated carbon"*), pyrolytischer Kohlenstoff, Graphit, ein Carbid-abgeleiteter Kohlenstoff (*"carbide-derived carbon"*), Kohlenstoffnanoröhren, Graphen, mesoporöse Kohlenstoffe, Stickstoff-oder Bor-dotierte Kohlenstoffe oder ein Gemisch aus mindestens zwei dieser Kohlenstoffmaterialien genannt werden.

Bevorzugt weist das Kohlenstoff-basierte Trägermaterial eine hohe BET-Oberfläche auf, um so die Ausbildung fein dispergierter Platinpartikel zu unterstützen. Das Trägermaterial weist beispielsweise eine BET-Oberfläche von mindestens 10 $m^2$/g, bevorzugter mindestens 50 $m^2$/g oder mindestens 150 $m^2$/g auf, z.B. 10-2000 $m^2$/g oder 50-1500 $m^2$/g oder 150-1300 $m^2$/g.

Optional kann das Kohlenstoff-basierte Trägermaterial porös sein. Beispielsweise weist das Trägermaterial ein Porenvolumen von mindestens 0,1 ml/g, bevorzugter mindestens 0,2 ml/g oder mindestens 0,3 ml/g auf, z.B. 0,1-4,0 ml/g oder 0,2-3,5 ml/g oder 0,3-3,0 ml/g.

Diese Trägermaterialien sind kommerziell erhältlich oder können über Verfahren, die dem Fachmann bekannt sind, hergestellt werden.

Platinverbindungen, die für das Imprägnieren eines Trägermaterials und eine danach erfolgende Reduktion zu metallischem Platin eingesetzt werden können, sind dem Fachmann bekannt.

Beispielsweise ist die Platinverbindung eine Pt(II)- oder eine Platin(IV)-Verbindung, z.B. ein Pt(II)- oder Pt(IV)-Salz oder eine Pt(II)- oder Pt(IV)-Komplexverbindung oder eine Pt-Organometallverbindung. Als beispielhafte Platinverbindungen können Hexachloroplatinsäure oder ein Salz dieser Säure, ein Platinnitrat, ein Platinhalogenid, Platinacetylacetonat oder Platinoxalat oder eine Mischung aus mindestens zwei dieser Verbindungen genannt werden.

Sofern die mit dem erfindungsgemäßen Verfahren zu erzeugenden metallischen Platinpartikel noch ein Legierungselement enthalten sollen, können zusätzlich zu der Platinverbindung noch eine oder mehrere Metallverbindungen dem wässrigen Medium zugegeben werden. In diesem Fall werden die als Trägermaterial fungierenden Kohlenstoffpartikel nicht nur mit der Platinverbindung, sondern auch mit der zusätzlichen Metallverbindung imprägniert. Bei dieser weiteren Metallverbindung kann es sich beispielsweise um eine Verbindung eines der folgenden Metalle handeln: Ru, Pd, Ir, Cr, Co, Ni, Cu, Fe, Mn, W, V. Diese weitere Verbindung kann beispielsweise ein Salz, ein Komplex oder eine Organometallverbindung sein.

Das wässrige Medium weist bevorzugt einen Wassergehalt von mehr als 50 Vol%, bevorzugter mehr als 70 Vol% auf.

Für den Imprägnierschritt können das Kohlenstoff-basierte Trägermaterial und die auf dem Trägermaterial abzuscheidende Platinverbindung gleichzeitig oder auch nacheinander in das wässrige Medium eingebracht werden. Beispielsweise wird zunächst das Trägermaterial in dem wässrigen Medium dispergiert und anschließend wird die Platinverbindung (z.B. in Form einer wässrigen Lösung) zudosiert.

Geeignete Bedingungen für das Imprägnieren des Kohlenstoff-basierten Trägermaterials mit der Platinverbindung sind dem Fachmann bekannt. Bevorzugt wird das wässrige Medium während des Imprägnierschritts gerührt. Die Rührerleistung kann dabei über einen breiten Bereich variiert werden. Beispielsweise kann bereits der Imprägnierschritt bei einer Rührer-Reynoldszahl von mindestens 50.000 oder mindestens 75.000 oder sogar mindestens 90.000 (z.B. 50.000-200.000 oder 75.000-180.000 90.000-150.000) durchgeführt werden. Alternativ ist es auch möglich, den Imprägnierschritt bei einer Rührer-Reynoldszahl von weniger als 50.000 durchzuführen.

Der pH-Wert des wässrigen Mediums während des Imprägnierschritts kann über einen breiten Bereich variiert werden. Beispielsweise weist das wässrige Medium während des Imprägnierschritts einen pH-Wert von maximal 6,0 auf.

Während des Imprägnierschritts beträgt die Temperatur des wässrigen Medium beispielsweise 20°C-95°C, bevorzugter 40°C bis 90°C oder 60°C bis 80°C. Für die Bestimmung der Rührer-Reynoldszahl während des Schritts (i) werden die Dichte und dynamische Viskosität von Wasser bei dieser Temperatur T verwendet.

Das Masseverhältnis von dem in der Platinverbindung vorliegenden Platin zum Trägermaterial beträgt beispielsweise 1/10 - 8/10, bevorzugter 2/10 - 7/10.

Das Trägermaterial liegt in dem wässrigen Medium beispielsweise in einer Menge von 0,05 Gew% bis 2,5 Gew%, bevorzugter 0,1 bis 2,0 Gew% vor.

Die Dauer des Imprägnierschritts wird so gewählt, dass sich die Platinverbindung in ausreichender Menge auf den als Trägermaterial fungierenden Kohlenstoffpartikeln abscheiden kann. Eine geeignete Zeitdauer kann der Fachmann anhand von Routineversuchen ermitteln.

Während des Imprägnierschritts wird die Platinverbindung auf dem Trägermaterial, d.h. auf der Oberfläche der Kohlenstoffpartikel adsorbiert. Im Falle von porösen Kohlenstoffpartikeln kann es sich dabei auch um eine innere, d.h. innerhalb der Poren liegende Oberfläche handeln. Als Ergebnis des Schritts (i) wird ein imprägniertes Trägermaterial erhalten.

Wie oben bereits erwähnt, wird in dem Reduktionsschritt (ii) das imprägnierte Trägermaterial in dem wässrigen Medium unter Rühren bei einem pH-Wert im Bereich von 3,5-6,0 und einer Rührer-Reynoldszahl von mindestens 50.000 mit einem Reduktionsmittel in Kontakt gebracht wird.

Durch das Inkontaktbringen mit dem Reduktionsmittel bilden sich metallische Platinpartikel auf dem Trägermaterial (d.h. auf der Oberfläche der Kohlenstoffpartikel). Die mit dem erfindungsgemäßen Verfahren hergestellte Katalysatorzusammensetzung enthält die metallischen Platinpartikel beispielsweise in einer Menge von 5-60 Gew%, bevorzugter 15-50 Gew% oder 25-50 Gew%.

Die Rührer-Reynoldszahl stellt im Bereich der Rührtechnik ein Maß dafür dar, wie intensiv ein flüssiges Medium gerührt wird. Für Werte der Rührer-Reynoldszahl von mehr als 10.000 gilt ein flüssiges Medium als turbulent durchmischt. Die Bestimmung der Rührer-Reynoldszahl bei einer Temperatur $T_R$ erfolgt in bekannter Weise anhand der folgenden Formel:

$$R = (\rho * N * D^2) / \eta$$

wobei

R die Rührer-Reynolds-Zahl ist,
$\rho$ die Dichte von Wasser in kg/m$^3$ bei der Temperatur $T_R$ ist,
N die Drehzahl des Rührers in Umdrehungen pro Sekunde ist,
D der maximale Durchmesser des Rührers ist,
$\eta$ die dynamische Viskosität von Wasser in kg/(m*s) bei der Temperatur $T_R$ ist.

Die Dichte und dynamische Viskosität von Wasser in Abhängigkeit von der Temperatur sind allgemein bekannt. Der maximale Durchmesser D des Rührers wird senkrecht zur Rührachse bestimmt.

Für das Rühren des wässrigen Mediums während des Reduktionsschritts (ii) können gängige Rührer eingesetzt werden. Durch Einstellen einer ausreichend hohen Rührergeschwindigkeit wird sichergestellt, dass die Reduktion bei einer Rührer-Reynoldszahl von mindestens 50.000 erfolgt. Als geeignete Rührer können beispielhaft Ankerrührer, Schne-

ckenrüher, Scheibenrüher, Impellerrüher Propellerrüher oder Schrägblattrührer genannt werden.

Schritt (ii) kann in gängigen, dem Fachmann bekannten Reaktoren durchgeführt werden.

Bevorzugt beträgt in Schritt (ii) das Verhältnis des maximalen Rührer-Durchmessers D zu dem maximalen Innendurchmesser $d_{Reaktor}$ des Reaktors, der in Schritt (ii) verwendet wird, mindestens 0,4, bevorzugter mindestens 0,5 oder mindestens 0,6.

In einer bevorzugten Ausführungsform gilt:

$$0,3 \leq D/d_{Reaktor} < 1,0;$$

bevorzugter gilt:

$$0,4 \leq D/d_{Reaktor} \leq 0,98$$

oder

$$0,5 \leq D/d_{Reaktor} \leq 0,90.$$

Eine geeignete Füllhöhe für das wässrige Medium, mit dem der Reaktor in Schritt (ii) befüllt wird, kann der Fachmann aufgrund seines Fachwissens bestimmen. Beispielsweise genügen die Füllhöhe H und der maximale Innendurchmesser $d_{Reaktor}$ des Reaktors der folgenden Bedingung:

$$0,5 \leq H/d_{Reaktor} < 2,0.$$

Bevorzugt werden für die Durchführung der Schritte (i) und (ii) derselbe Reaktor und derselbe Rührer verwendet.

Als Reduktionsmittel kann beispielsweise Ameisensäure, ein Metallborhydrid (z.B. ein Alkalimetallborhydrid wie $NaBH_4$ und $LiBH_4$), ein Alkalimetallhydrid (z.B. Natriumhydrid), Wasserstoff ($H_2$), ein Metallthiosulfat (z.B. ein Alkalimetallthiosulfat wie $NaS_2O_3$), ein Aldehyd (z.B. Formaldehyd), ein Alkohol (z.B. ein Monohydroxyalkohol wie Isopropanol), Hydrazin, Hydrazinhydrat, Hydrazinhydrochlorid oder Ascorbinsäure oder ein Gemisch aus mindestens zwei dieser Reduktionsmittel eingesetzt werden.

Eine geeignete Temperatur $T_R$ für den Reduktionsschritt (d.h. eine geeignete Temperatur des wässrigen Mediums während des Reduktionsschritts (ii)) kann der Fachmann in Abhängigkeit von dem verwendeten Reduktionsmittel aufgrund seines Fachwissens bestimmen. Die Temperatur $T_R$ des wässrigen Mediums in Schritt (ii) liegt beispielsweise im Bereich von 20°C bis 95°C, bevorzugter 30°C bis 90°C oder 50°C bis 80°C. Für die Bestimmung der Rührer-Reynoldszahl werden die Dichte und dynamische Viskosität von Wasser bei dieser Temperatur $T_R$ verwendet.

Bevorzugt beträgt die Rührer-Reynoldszahl in Schritt (ii) mindestens 75.000, noch bevorzugter mindestens 90.000. In einer bevorzugten Ausführungsform beträgt die Rührer-Reynoldszahl 50.000-200.000, bevorzugter 75.000-180.000, noch bevorzugter 90.000-150.000.

Bevorzugt liegt der pH-Wert des wässrigen Mediums in Schritt (ii) im Bereich von 4,5-5,6, bevorzugter 4,9-5,3.

Durch die Reduktion wird die auf den als Trägermaterial fungierenden Kohlenstoffpartikeln vorliegende Platinverbindung zu metallischem Platin reduziert und es bilden sich metallische Nanopartikel auf dem Trägermaterial (d.h. auf den Kohlenstoffpartikeln). Sofern das Trägermaterial mit weiteren metallischen Verbindungen imprägniert wurde, kann durch die Reduktion eine Platinlegierung erhalten werden, beispielsweise eine Platinlegierung, die eines oder mehrere der folgenden Metalle enthält: Ru, Pd, Ir, Cr, Co, Ni, Cu, Fe, Mn, W, V.

Nach erfolgter Reduktion der Platinverbindung zu metallischen Platinpartikeln (wobei es sich um elementares Platin oder eine Platinlegierung handeln kann), kann die Katalysatorzusammensetzung über herkömmliche Methoden aus dem wässrigen Medium isoliert und einer Trocknung unterzogen werden.

Über das oben beschriebene Verfahren ist eine Katalysatorzusammensetzung erhältlich, die sehr gute katalytische Eigenschaften, insbesondere eine sehr hohe Masseaktivität aufweist.

Daher betrifft die vorliegende Erfindung außerdem eine Katalysator-zusammensetzung, umfassend

- ein Trägermaterial in Form von Kohlenstoffpartikeln,
- metallische Platinpartikel, die auf dem Trägermaterial vorliegen und eine Volumen-gewichtete Partikelgrößenverteilung, bestimmt über Röntgenkleinwinkelstreuung, mit einem $d_{10}$-Wert $\geq 2,0$ nm und $d_{90}$-Wert $\leq 7,0$ nm aufweisen.

In einer bevorzugten Ausführungsform weist die Volumen-gewichtete Partikelgrößenverteilung der Platinpartikel einen Medianwert dso auf, der im Bereich von 3,0-5,0 nm, bevorzugter 3,5-4,5 nm liegt.

Bevorzugt ist $d_{10} \geq 2,0$ nm und $d_{90} \leq 6,5$ nm, noch bevorzugter $d_{10} \geq 2,3$ nm und $d_{90} \leq 6,0$ nm.

Bevorzugt genügen die $d_{10}$-, $d_{90}$- und $d_{50}$-Werte der Partikelgrößenverteilung der Platinpartikel der folgenden Bedingung:

$$(d_{90} - d_{10}) / d_{50} \leq 1.0$$

Noch bevorzugter gelten folgende Bedingungen:

$$0,5 \leq (d_{90} - d_{10}) / d_{50} \leq 1,2$$

oder

$$0,6 \leq (d_{90} - d_{10}) / d_{50} \leq 0,9$$

Die Katalysatorzusammensetzung enthält die metallischen Platinpartikel beispielsweise in einer Menge von 5-60 Gew%, bevorzugter 15-50 Gew% oder 25-50 Gew%.

Bevorzugt enthalten die Platinpartikel kein weiteres metallisches Element, abgesehen von unvermeidlichen Verunreinigungen (d.h. das Platin liegt in elementarer Form vor). Alternativ ist es auch möglich, dass das Platin in Form einer Platinlegierung vorliegt. Die Platinlegierung kann beispielsweise eines oder mehrere der folgenden Metalle enthalten: Ru, Pd, Ir, Cr, Co, Ni, Cu, Fe, Mn, W, V.

Hinsichtlich der bevorzugten Eigenschaften des Kohlenstoff-basierten Trägermaterials kann auf die obigen Ausführungen verwiesen werden.

Als Trägermaterial können beispielsweise Ruß (*"carbon black"*, z.B. Acetylen-Ruß (*"acetylene black"*), Channel-Ruß (*"channel black"*), Furnace-Ruß (*"furnace black"*), Flammruß (*"lamp black"*) oder Spaltruß (*"thermal black"*)), Aktivkohle (*"activated carbon"*), pyrolytischer Kohlenstoff, Graphit, ein Carbid-abgeleiteter Kohlenstoff (*"carbide-derived carbon"*), Kohlenstoffnanoröhren, Graphen, mesoporöse Kohlenstoffe, Stickstoff-oder Bor-dotierte Kohlenstoffe oder ein Gemisch aus mindestens zwei dieser Kohlenstoffmaterialien genannt werden.

Das Trägermaterial weist beispielsweise eine BET-Oberfläche von mindestens 10 $m^2/g$, bevorzugter mindestens 50 $m^2/g$ oder mindestens 150 $m^2/g$ auf, z.B. 10-2000 $m^2/g$ oder 50-1500 $m^2/g$ oder 150-1300 $m^2/g$. Optional kann das Trägermaterial porös sein. Beispielsweise weist das Trägermaterial ein Porenvolumen von mindestens 0,1 ml/g, bevorzugter mindestens 0,2 ml/g oder mindestens 0,3 ml/g auf, z.B. 0,1-4,0 ml/g oder 0,2-3,5 ml/g oder 0,3-3,0 ml/g.

Bevorzugt besteht die Katalysatorzusammensetzung zu mindestens 90 Gew%, bevorzugter mindestens 95 Gew% oder sogar mindestens 98 Gew% aus dem Kohlenstoff-basierten Trägermaterial und den Platinpartikeln.

Bevorzugt ist die Oberfläche der Platinpartikel frei von oberflächenaktiven Substanzen.

In einer bevorzugten Ausführungsform ist die Katalysatorzusammensetzung über das oben beschriebene erfindungsgemäße Verfahren erhältlich.

Weiterhin betrifft die vorliegende Erfindung eine elektrochemische Zelle, insbesondere eine Brennstoff- oder Elektrolysezelle, enthaltend die oben beschriebene Katalysatorzusammensetzung.

Die Brennstoffzelle kann beispielsweise eine Protonenaustauschmembran(PEM)-Brennstoffzelle sein, z.B. eine Wasserstoff- oder eine Methanol-PEM-Brenstoffzelle. Bei der Elektrolysezelle handelt es sich bevorzugt um eine Elektrolysezelle für die Wasserelektrolyse, insbesondere eine PEM-Wasserelektrolysezelle.

Weiterhin betrifft die vorliegende Erfindung die Verwendung der oben beschriebenen Zusammensetzung als Katalysator für eine elektrochemische Reaktion.

Bei dieser elektrochemischen Reaktion handelt es sich beispielsweise um die elektrochemische Reduktion von Sauerstoff ("oxygen reduction reaction", ORR), die elektrochemische Oxidation von Wasserstoff ("hydrogen oxidation reaction", HOR), die elektrochemische Bildung von Sauerstoff aus Wasser ("oxygen evolution reaction", OER) oder die elektrochemische Bildung von Wasserstoff aus Wasser ("hydrogen evolution reaction", HER).

Nachfolgend sind die in der vorliegenden Erfindung verwendeten Messmethoden angegeben.

Reynolds-Zahl:

Die Bestimmung der Rührer-Reynoldszahl bei einer Temperatur $T_R$ erfolgt anhand der folgenden Formel:

$$R = (\rho * N * D^2) / \eta$$

wobei

R die Rührer-Reynolds-Zahl ist,
$\rho$ die Dichte von Wasser in kg/m$^3$ bei der Temperatur $T_R$ ist,
N die Drehzahl des Rührers in Umdrehungen pro Sekunde ist,
D der maximale Durchmesser des Rührers ist,
$\eta$ die dynamische Viskosität von Wasser in kg/(m*s) bei der Temperatur $T_R$ ist.

Die Dichte und dynamische Viskosität von Wasser in Abhängigkeit von der Temperatur sind allgemein bekannt. Der maximale Durchmesser des Rührers wird senkrecht zur Rührachse bestimmt.

Bestimmung des pH-Werts:

Die Bestimmung des pH-Werts erfolgte mit einem Mettler Toledo SevenCompact, ausgestattet mit einer InLab Reach Pro-425 Elektrode. Elektrodentyp: pH-Kombinationselektrode; Diaphragmatyp: Keramik; Referenzelektrolyt: 3 mol/l KCl; Schaftmaterial: Glas; Referenzelektrode: Ag/AgCl.
Die Elektrode wird vor der Messung kalibriert.

Partikelgrößenverteilung, $d_{10}$-, $d_{50}$- und $d_{90}$-Werte:

Die Partikelgrößenverteilung wurde über Röntgenkleinwinkelstreuung ermittelt.
Das "Bragg-Brentano"-Gerät X'Pert Pro wird in Transmissionsgeometrie betrieben und der Primärstrahl mit einem Spiegel versehen, um einen kollimierten Strahl zu erzeugen. Katalysatormaterial (10-20 mg) wird zwischen zwei Mylar-Folien in einem Transmissionsprobenträger appliziert. Ein Probenhalter mit dem entsprechenden Trägermaterial wird für die Bestimmung des Untergrunds benötigt. Die Strahlenquelle war eine Cu-Röntgenröhre mit der Standardanregung von 40 kV & 40 mA und mit der Wellenlänge von 0,1542 nm.
Die erhaltenen Streukurven nach dem Untergrundabziehen wurden mittels PANalytical EasySAXSSoftware (Ver. 2.0) ausgewertet. Die Partikelgrößenverteilungskurven wurden mit den in dieser Software implementierten Algorithmen berechnet. Das Prinzip besteht darin, dass die aus der Messung resultierende Streukurve I(q) über das folgende Integral mit der Partikelgrößenverteilung DV(R) im Zusammenhang steht:

$$I(q) = \int_{R=0}^{R=R_{Max}} D_V(R) \cdot R^3 \cdot I_0(q, R)\, dR$$

Die verwendeten Symbole sind folgendermaßen definiert:

q: Streuvektor
$D_v(R)$: volumengewichtete Partikelgrößenverteilung
R: Partikelradius

Da die indirekte Fouriertransformation von der oben stehenden Gleichung auf das Rauschen in Messdaten sehr empfindlich ist, wird die Dv(R) -Bestimmung anhand eines iterativen Prozesses durchgeführt. Die aus dieser Bestimmung resultierende Verteilungskurve Dv(R) stellt die volumengewichtete Partikelgrößenverteilung dar (Verteilung nach Partikelvolumen); dies steht mit der anzahlgewichteten Partikelgrößenverteilung $D_N(R)$ im folgenden Zusammenhang:

$$D_V(R) \sim \frac{4\pi}{3} R^3 \cdot D_N(R)$$

Für die Bestimmung der Partikelgrößenverteilung mit der Dv(R)-Funktion wird angenommen, dass ein Ensemble von homogenen, nicht wechselwirkenden, kugelförmigen Partikeln vorliegt. Der Algorithmus verwendet eine indirekte Fourier-Transformation, die in der folgenden Referenz beschrieben wird: D.I. Svergun et al., Acta Cryst., A44, 1988, S. 244-250. Es wird dabei keine Annahme über die Form der Verteilungskurve gemacht. Erhalten wird eine Partikelvolumengewichtete Größenverteilung.

Anhand der Partikelgrößenverteilung der Platinpartikel können die $d_{10}$-, $d_{50}$- und $d_{90}$-Werte bestimmt werden. Der $d_x$-Wert gibt an, welcher volumengewichtete Anteil x (in %) der Partikel unterhalb dieser Partikelgröße liegt.

Messaufbau für elektrochemische Messungen:

Die Messungen der elektrochemischen Parameter wie Massenaktivität und elektrochemisch aktive Oberfläche wurden mittels rotierender Scheibenelektrode (rotating disk electrode, RDE) durchgeführt.

Alle Messungen wurden in einer Messzelle mit drei Teflon-Behältern in 0.1 M $HClO_4$ Elektrolytlösung bei Raumtemperatur durchgeführt, unter Verwendung einer $Hg/Hg_2SO_4$ Referenzelektrode (Schott Instruments GmbH), einem Platinnetz als Gegenelektrode und einem Potentiostaten.

20 $\mu$l einer wässrigen Katalysatordispersion wurden auf einen zuvor auf Spiegelglanz polierten Probenkörper mit Glaskohlenstoffsubstrat (Durchmesser: 5mm; 0,196 $cm^2$ Pine Research Instrumentation AFE5T050GC) aufgebracht und geschlossen unter Luftatmosphäre getrocknet. Die so hergestellte Probe hatte eine Edelmetallbeladung von 14 $\mu g_{Pt}cm^{-2}$ und wurde an einer rotierenden Elektrode (Pine Research Instrumentation AFMSRCE) befestigt. Weiterhin sind alle Messungen, Bestimmung der ektrochemisch aktiven Oberfläche sowie die Bestimmung der Massenaktivität, mit kompensiertem Elektrolytwiderstand durchgeführt worden. Dazu wurde der Mittelwert des Ohm'schen Anteils des Elektrolytwiderstand vor der Messung bei 4 kHz, 5 kHz, 6 kHz bestimmt und mit der "iR-compenstaion"-Funktion des Potentiostaten auf einen Restwiderstand von 2 Ohm kompensiert.

Bestimmung der elektrochemischen Oberfläche (EASA):

Die elektrochemisch aktive Oberfläche wurde aus der gemessenen Ladung der Wasserstoffunterpotentialabscheidung bestimmt. Dazu dienten die Polarisationskurven in Argon gesättigtem Elektrolyten mit einer Potentialvorschubgeschwindigkeit von 50 $mVs^{-1}$. Die Ladung ergibt sich nach Abzug der elektrochemischen Doppelschichtkapazität aus der Integration des Stroms über die Zeit. Als Umrechnungsfaktor zur Bestimmung der Platinoberfläche wird von 200 $\mu Ccm^{-2}$ ausgegangen.

Bestimmung der Massenaktivität:

Die Massenaktivität wurde aus der anodischen Polarisationskurve in Sauerstoff gesättigtem Elektrolyten mit einer Potentialvorschubgeschwindigkeit von 50 $mVs^{-1}$ und einer Rotationsrate von 1600 $min^{-1}$ der Scheibenelektrode nach Abzug der Polarisationskurve in Argon ermittelt.

BET-Oberfläche:

Die BET-Oberfläche wird durch Stickstoffsorption bei 77 K unter Verwendung der BET-Methode bestimmt.

Porenvolumen:

Das Porenvolumen wird durch Stickstoffsorption bei 77 K und einem Relativdruck $P/P_0$=0.99 bestimmt.

Die vorliegende Erfindung wird anhand der nachfolgenden Beispiele eingehender erläutert.

**Beispiele**

Beispiel 1

Imprägnierschritt (i):

6g Ruß ("*Carbon Black*"), kommerziell erhältlich als Vulcan® XC72-R mit einer BET-Oberfläche von etwa 250 $m^2$/g, wurden mit 100 ml Wasser aufgeschlämmt, in einen Doppelmantelreaktor gegeben und mit Wasser auf 2 L aufgefüllt. Die Rührer-Reynoldszahl wurde auf 100.854 eingestellt und die Suspension auf 70°C aufgeheizt. Nach einer Haltezeit von 1 Stunde wurden 40 g einer salpetersauren $H_2PtCl_6$-Lösung (10 Gew% Pt) zudosiert und anschließend unter gleichbleibender Durchmischung und Temperatur 1 Stunde gehalten.

Reduktionsschritt (ii):

Durch Zugabe von $Na_2CO_3$ wurde der pH-Wert des wässrigen Mediums auf einen Wert von 5,1 eingestellt.

Danach erfolgte die Zugabe von Ameisensäure, die als Reduktionsmittel fungierte. Die Rührer-Reynoldszahl betrug 100.854 und die Temperatur des wässrigen Mediums betrug 70°C. Das Verhältnis des maximalen Rührer-Durchmessers D zu dem maximalen Innendurchmesser $d_{Reaktor}$ des Reaktors betrug 0,69. Während der Reduktion wurde die auf den Kohlenstoffpartikeln vorliegende Platinverbindung zu metallischem Platin reduziert. Man erhielt Kohlenstoffpartikel, auf denen metallische Platinpartikel geträgert sind. Nach 0,5 Stunden wurde die Katalysatorzusammensetzung aus dem wässrigen Medium abfiltriert und bei 110°C unter Stickstoffstoffatmosphäre getrocknet. Der Platingehalt der Katalysatorzusammensetzung betrug 40 Gew%.

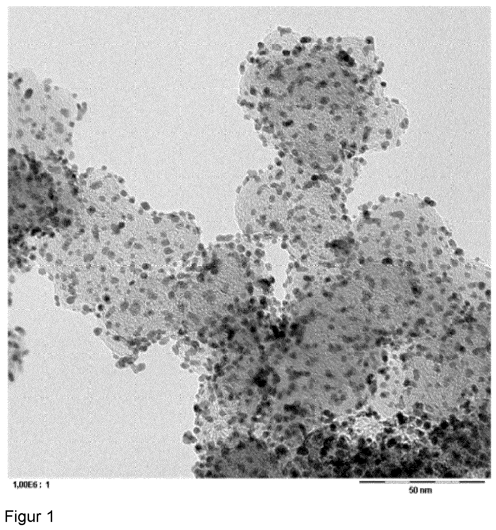

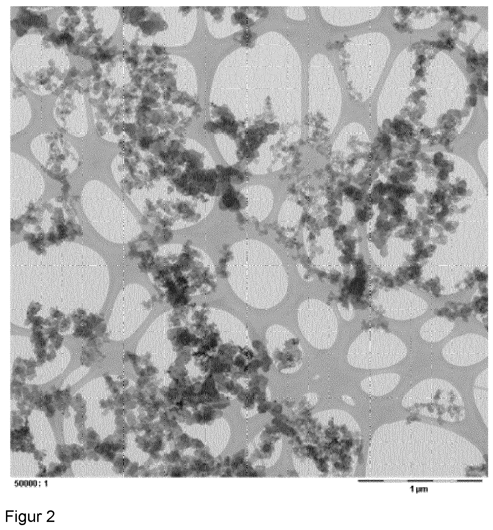

Von der Katalysatorzusammensetzung wurden TEM-Aufnahmen mit unterschiedlichen Vergrößerungen gemacht. Diese TEM-Aufnahmen werden in den Figuren 1 und 2 gezeigt.

Aus der Figur 1, die nur wenige Kohlenstoffpartikel in starker Vergrößerung zeigt, ist ersichtlich, dass die metallischen Platinpartikel sehr homogen mit einem hohen Dispersionsgrad über die als Trägermaterial fungierenden Kohlenstoffpartikel verteilt sind.

Aus der Figur 2, die im Vergleich zur Figur 1 eine deutlich größere Anzahl an Kohlenstoffpartikeln zeigt, ist ersichtlich, dass die Platinpartikel nahezu ausschließlich auf den Kohlenstoffpartikeln geträgert sind. Die Bildung ungeträgerter und agglomerierter Platinpartikel wurde also nahezu vollständig unterdrückt.

Die Verfahrensbedingungen des Reduktionsschritts und die aus den TEM-Aufnahmen erkennbaren Eigenschaften der geträgerten Katalysatorzusam-mensetzung sind nachfolgend in der Tabelle 1 zusammengefasst.

Über Röntgenkleinwinkelstreuung wurde die Partikelgrößenverteilung der Platinpartikel ermittelt. Anhand der Partikelgrößenverteilung wurden der $d_{10}$-, $d_{50}$- und $d_{90}$-Wert bestimmt. Weiterhin wurden für die Katalysatorzusammensetzung des Beispiels 1 die elektrochemisch aktive Oberfläche (EASA) und die Masseaktivität bestimmt.

Die Ergebnisse sind nachfolgend in der Tabelle 2 zusammengefasst.

Vergleichsbeispiel 1

In Vergleichsbeispiel 1 wurde die Katalysatorzusammensetzung unter den gleichen Verfahrensbedingungen wie in Beispiel 1 hergestellt, allerdings mit folgender Abweichung: Während des Reduktionsschritts (ii) betrug der pH-Wert des wässrigen Mediums 8,0. Rührer und Reaktor des Vergleichsbeispiels 1 entsprachen dem Rührer und dem Reaktor des Beispiels 1.

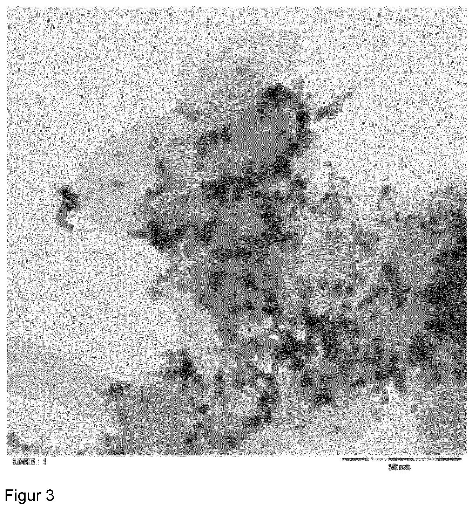

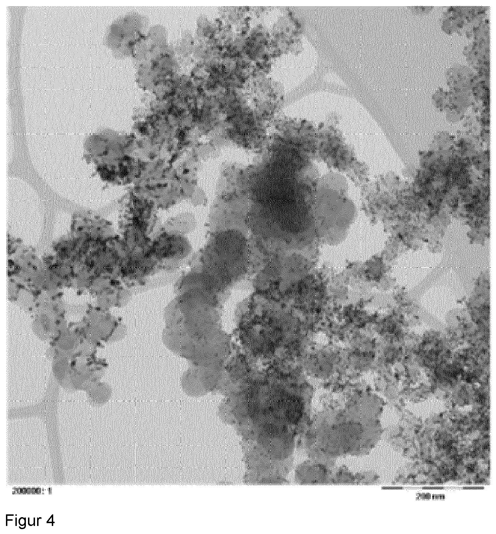

Von der Katalysatorzusammensetzung wurden TEM-Aufnahmen mit unterschiedlichen Vergrößerungen gemacht. Diese TEM-Aufnahmen werden in den Figuren 3 und 4 gezeigt.

Aus der Figur 3, die nur wenige Kohlenstoffpartikel in starker Vergrößerung zeigt, ist ersichtlich, dass die auf den Kohlenstoffpartikeln vorliegenden metallischen Platinpartikel im Vergleich zu der Probe aus Beispiel 1 einen deutlich schlechteren Dispersionsgrad aufweisen. Aus der Figur 4, die im Vergleich zur Figur 3 eine deutlich größere Anzahl an Kohlenstoffpartikeln zeigt, ist ersichtlich, dass der überwiegende Anteil der Platinpartikel auf den Kohlenstoffpartikeln geträgert ist.

Die Verfahrensbedingungen des Reduktionsschritts und die aus den TEM-Aufnahmen erkennbaren Eigenschaften der geträgerten Katalysator-zusammensetzung sind nachfolgend in der Tabelle 1 zusammengefasst.

Über Röntgenkleinwinkelstreuung wurde die Partikelgrößenverteilung der Platinpartikel ermittelt. Anhand der Partikelgrößenverteilung wurden der $d_{10}$-, $d_{50}$- und $d_{90}$-Wert bestimmt.

Weiterhin wurden für die Katalysatorzusammensetzung des Vergleichsbeispiels 1 die elektrochemisch aktive Oberfläche (EASA) und die Masseaktivität bestimmt.

Die Ergebnisse sind nachfolgend in der Tabelle 2 zusammengefasst.

Vergleichsbeispiel 2

In Vergleichsbeispiel 2 wurde die Katalysatorzusammensetzung unter den gleichen Verfahrensbedingungen wie in Beispiel 1 hergestellt, allerdings mit folgender Abweichung: Während des Reduktionsschritts (ii) betrug die Rührer-Reynoldszahl 40.419. Der Rührer des Vergleichsbeispiels 2 entsprach dem Rührer des Beispiels 1, wurde aber mit einer anderen Rührer-Reynoldszahl betrieben. Auch der Reaktor des Vergleichsbeispiels 2 entsprach dem in Beispiel 1 verwendeten Reaktor.

Von der Katalysatorzusammensetzung wurden TEM-Aufnahmen mit unterschiedlichen Vergrößerungen gemacht. Diese TEM-Aufnahmen werden in den Figuren 5 und 6 gezeigt.

Aus der Figur 5, die nur wenige Kohlenstoffpartikel in starker Vergrößerung zeigt, ist ersichtlich, dass die auf den Kohlenstoffpartikeln vorliegenden metallischen Platinpartikel einen hohen Dispersionsgrad aufweisen. Allerdings ist aus Figur 6 ersichtlich, dass sich signifikante Mengen an ungeträgerten, agglomerierten Platinpartikeln gebildet haben.

Die Verfahrensbedingungen des Reduktionsschritts und die aus den TEM-Aufnahmen erkennbaren Eigenschaften der geträgerten Katalysator-zusammensetzung sind nachfolgend in der Tabelle 1 zusammengefasst.

Tabelle 1: Verfahrensbedingungen des Reduktionsschritts und Eigenschaften der Pt-Partikel

| | Beispiel 1 | Vergl.bsp. 1 | Vergl.bsp. 2 |
|---|---|---|---|
| pH-Wert während des Reduktionsschritts (ii) | 5,1 | 8,0 | 5,1 |
| Rührer-Reynoldszahl während des Reduktionsschritts (ii) | 100.854 | 100.854 | 40.419 |
| Dispersionsgrad der Pt-Partikel auf den Kohlenstoffpartikeln (aus TEM-Aufnahme) | Sehr gut | Mittel | Sehr gut |
| Anteil ungeträgerter Pt-Partikel (aus TEM-Aufnahme) | Sehr gering | gering | Sehr hoch |

Wie die Tabelle 1 zeigt, werden ein hoher Dispersionsgrad der geträgerten Platin-Partikel bei nahezu vollständiger Vermeidung von ungeträgerten Platin-Partikeln nur dann erreicht, wenn für den Reduktionsschritt sowohl der pH-Wert als auch die Rührer-Reynoldszahl in den erfindungsgemäßen Bereichen liegen.

Wenn die Reduktion bei zu geringer Rührer-Reynoldszahl durchgeführt wird, zeigen die auf den Kohlenstoffpartikeln vorliegenden Platinpartikel zwar einen hohen Dispersionsgrad, es liegt jedoch ein signifikanter Anteil an nicht geträgerten (d.h. nicht auf den Kohlenstoffpartikeln vorliegenden) Platin-Partikeln vor, siehe Vergleichsbeispiel 2.

Wenn die Reduktion zwar bei sehr hoher (d.h. erfindungsgemäßer) Reynoldszahl erfolgte, der pH-Wert jedoch nicht erfindungsgemäß war, kann zwar der Anteil von ungeträgerten Pt-Agglomeraten relativ gering gehalten werden, die auf den Kohlenstoffpartikeln geträgerten Platinpartikel weisen jedoch keinen hohen Dispersionsgrad auf.

Für die Proben des Beispiels 1 und des Vergleichsbeispiels 1 (d.h. den Proben, in denen die Platinpartikel ganz überwiegend geträgert vorliegen) wurden die Partikelgrößen der Platinpartikel, die elektrochemisch aktive Oberfläche und die Masseaktivität bestimmt. Die Ergebnisse werden in der Tabelle 2 gezeigt.

Tabelle 2: Partikelgrößen, EASA und Masseaktivität der Pt-Partikel

| | Beispiel 1 | Vergl.bsp. 1 |
|---|---|---|
| $d_{10}$ [nm] | 2,6 | 3,0 |
| $d_{50}$ [nm] | 3,8 | 5,3 |
| $d_{90}$ [nm] | 5,2 | 19,0 |
| $(d_{90} - d_{10})/d_{50}$ | 0,7 | 3,0 |
| Elektrochemisch aktive Oberfläche (EASA) [$m^2$/g] | 65 | 50 |
| Masseaktivität [A/g Pt] | 464 | 374 |

Mit der erfindungsgemäßen Katalysatorzusammensetzung konnte eine Masseaktivität von deutlich mehr als 400 A/g Pt erzielt werden. Trotz dieser sehr hohen Masseaktivität weist die Zusammensetzung nur einen äußerst geringen Anteil an sehr kleinen Pt-Partikeln mit einem Durchmesser von weniger als 2 nm auf (siehe dio-Wert in Beispiel 1), was sich positiv auf die Stabilität der Pt-Partikel unter den sehr korrosiven Bedingungen einer Brennstoffzelle oder Elektrolysezelle auswirkt.

**Patentansprüche**

1. Eine Katalysatorzusammensetzung, umfassend

   - ein Trägermaterial in Form von Kohlenstoffpartikeln,
   - metallische Platinpartikel, die auf dem Trägermaterial vorliegen und eine Volumen-gewichtete Partikelgrößenverteilung, bestimmt über Röntgenkleinwinkelstreuung, mit einem $d_{10}$-Wert $\geq$ 2,0 nm und $d_{90}$-Wert $\leq$ 7,0 nm aufweisen.

2. Die Katalysatorzusammensetzung nach Anspruch 1, wobei die Volumen-gewichtete Partikelgrößenverteilung der Platinpartikel einen Medianwert $d_{50}$ aufweist, der im Bereich von 3,0-5,0 nm, bevorzugter 3,5-4,5 nm liegt.

3. Die Katalysatorzusammensetzung nach Anspruch 1 oder 2, wobei $d_{10} \geq$ 2,0 nm und $d_{90} \leq$ 6,5 nm, bevorzugter $d_{10}$

$\geq$ 2,3 nm und $d_{90} \leq$ 6,0 nm sind.

4. Die Katalysatorzusammensetzung nach einem der Ansprüche 1-3, wobei die $d_{10}$-, $d_{90}$- und dso-Werte der Partikelgrößenverteilung der Platinpartikel der folgenden Bedingung genügen:

$$(d_{90} - d_{10}) / d_{50} \leq 1.0.$$

5. Die Katalysatorzusammensetzung nach einem der Ansprüche 1-4, wobei die metallischen Platinpartikel in einer Menge von 5-60 Gew%, bevorzugter 15-50 Gew% in der Katalysatorzusammensetzung vorliegen.

6. Eine elektrochemische Zelle, insbesondere eine Brennstoff- oder Elektrolysezelle, enthaltend die Katalysatorzusammensetzung nach einem der Ansprüche 1-5.

7. Verwendung der Katalysatorzusammensetzung nach einem der Ansprüche 1-5 als Katalysator für eine elektrochemische Reaktion.

8. Verwendung nach Anspruch 7, wobei die elektrochemische Reaktion die elektrochemische Reduktion von Sauerstoff, die elektrochemische Oxidation von Wasserstoff, die elektrochemische Bildung von Sauerstoff aus Wasser oder die elektrochemische Bildung von Wasserstoff aus Wasser ist.

Figur 1

Figur 2

Figur 3

Figur 4

**IN DER BESCHREIBUNG AUFGEFÜHRTE DOKUMENTE**

**In der Beschreibung aufgeführte Patentdokumente**

- US 20060099483 A1

**In der Beschreibung aufgeführte Nicht-Patentliteratur**

- **J.C. MEIER et al.** *Beilstein J. Nanotechnol.,* 2014, vol. 5, 44-67
- **K.B. KOKOH et al.** *Catalysts,* 2015, vol. 5, 310-348
- **D.I. SVERGUN et al.** *Acta Cryst,* 1988, vol. A44, 244-250